# EUROPEAN PATENT APPLICATION

(11) **EP 1 489 152 A2**
(43) Date of publication of application: **22.12.2004**
(21) Application number: 04014260.6
(22) Date of filing: 17.06.2004
(51) Int. Cl.: C09D 179/08

(54) **Coating composition for use in sliding members**

(30) Priority: 19.06.2003 JP 2003175270
(71) Applicant: Dow Corning Asia, Ltd., Tokyo 100-0005 (JP); Kabushiki Kaisha Toyota Jidoshokki, Kariya-shi, Aichi-ken (JP)
(72) Inventor: Sugioka, Takahiro, Kariya-shi Aichi-ken (JP); Sugiura, Manabu, Kariya-shi Aichi-ken (JP); Hoshida, Takahiro, Kariya-shi Aichi-ken (JP); Osako,Masami, Kariya-shi Aichi-ken (JP); Shimo, Toshihisa, Kariya-shi Aichi-ken (JP); Murase, Hitotoshi, Kariya-shi Aichi-ken (JP); Yamaguchi, Tetsuji, Tokyo 100-0005 (JP); Yamashita, Jiro, Tokyo 100-0005 (JP)
(74) Representative: Vollnhals, Aurel, Dipl.-Ing.

(57) **Abstract**

A coating composition for use in sliding members contains a polyamideimide resin and a solid lubricant and is prepared by mixing these ingredients. The polyamideimide resin is a substance having a glass transition temperature of 270°C or above or a substance having a tensile strength of 200 MPa or more at room temperature. The sliding film made of the coating composition for use in sliding members is provided with a satisfactory sliding property.

## Description

### BACKGROUND OF THE INVENTION

The present invention relates to a coating composition for use in sliding members.

Japanese Laid-Open Patent Publication No. 11-13638, for example, discloses a coating composition for use in sliding members, which composition contains a polyamideimide resin and a solid lubricant such as molybdenum disulfide and is prepared by mixing these ingredients.

The coating composition for use in sliding members is applied onto a substrate and then heated to form a sliding film. A binder resin contained in the sliding film and comprising a polyamideimide resin comparatively low in cost is firmly adhered to the substrate. The solid lubricant held in the binder resin improves the seizure resistance and the abrasion resistance. For example, when a sliding film comprising a coating composition for use in sliding members is formed on the outer surface of a swash plate, as a substrate, of a compressor, a preferable sliding property is exhibited between the swash plate and shoes. Consequently, the durability of the compressor is improved.

For a sliding film, further improved sliding properties are desired under severe conditions, than the sliding properties attainable with the sliding film formed of the above described coating composition for use in sliding members. For example, when a compressor is one in which carbon dioxide as the refrigerant is compressed, higher sliding properties are required.

### SUMMARY OF THE INVENTION

An object of the present invention is to provide a coating composition for use in sliding members, which composition is capable of forming a sliding film having satisfactory sliding properties.

To achieve the foregoing and other objectives and in accordance with the purpose of the present invention, a coating composition for use in sliding members is provided. The composition is obtained by mixing a polyamide-imide resin and a solid lubricant. At least one of the following requirements is satisfied.
(I) The glass transition temperature of the polyamide-imide resin is no less than 270°C.
(II) The tensile strength of the polyamide-imide resin at room temperature is no less than 200 MPa.
(III) The polyamide-imide resin contains more imide groups than amide groups.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a graph showing the results of thermomechanical measurements in test (i) on a PAI resin of a test article I;;
Fig. 2 is a graph showing the results of thermomechanical measurements in test (i) on a PAI resin of a test article II;
Fig. 3 is a graph showing the results of thermomechanical measurements in test (i) on a PAI resin of a comparison article;
Fig. 4 is a graph showing the results of dynamic viscoelasticity measurements in test (i) on the PAI resin of the test article I;
Fig. 5 is a graph showing the results of dynamic viscoelasticity measurements in test (i) on the PAI resin of the test article II;
Fig. 6 is a graph showing the results of dynamic viscoelasticity measurements in test (i) on the PAI resin of the comparison article;
Fig. 7 is a cross-sectional view of the test apparatus in test (i);
Fig. 8 is a graph showing the results of a first round of the test (i) on the test article I;
Fig. 9 is a graph showing the results of a second round of the test (i) on the test article I;
Fig. 10 is a graph showing the results of a first round of the test (i) on the test article II;
Fig. 11 is a graph showing the results of a second round of the test (i) on the test article II;
Fig. 12 is a graph showing the results of a first round of the test (i) on the comparison article;
Fig. 13 is a graph showing the results of a second round of the test (i) on the comparison article; and
Fig. 14 is a graph showing the test results of the test article I and the comparison article in test (ii).

### DETAILED DESCRIPTION OF THE PREFERRED EMBODIMENTS

For the purpose of confirming the effects of the coating composition for use in sliding members of the present invention, test (i) and test (ii) described below were conducted.

### (Test (i) )

First, PAI resin varnishes (test articles I and II) that contain more imide groups than amide groups, and a PAI resin varnish (comparison article) that contains substantially the same number of imide groups and amide groups were prepared. Each of the PAI resin varnishes contains 30 mass% of a PAI resin and 70 mass% of a solvent. The solvent contains 56 mass% of n-methyl-2-pyrrolidone and 14 mass% of xylene. The number average molecular weight of the PAI resin is no less than 20,000.

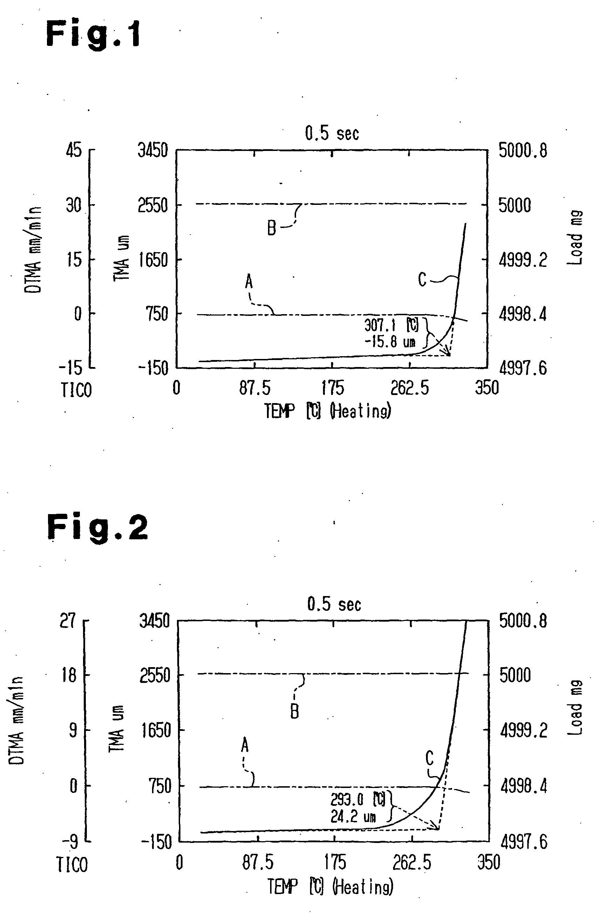

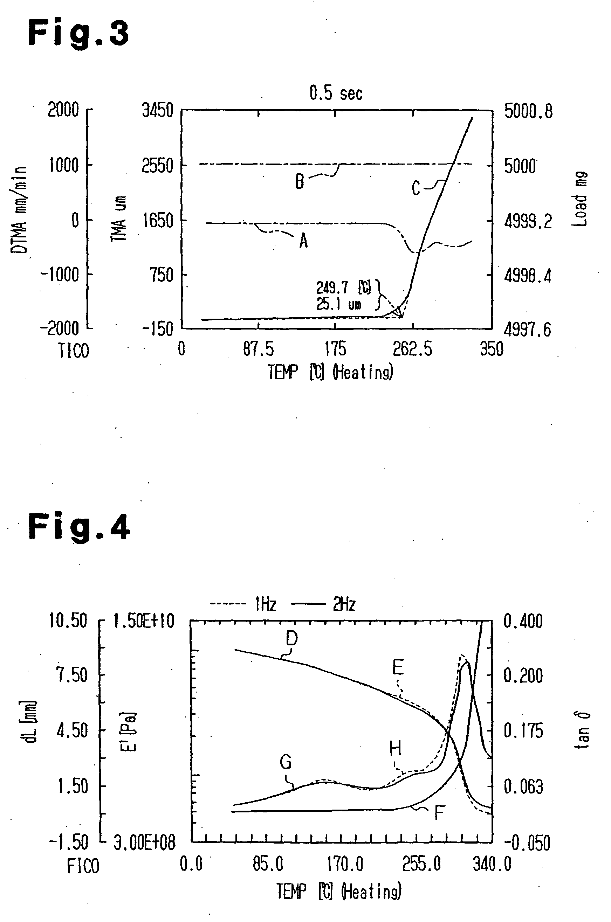

Each of the PAI resin varnishes of the test articles I, II and the compression article was baked at 200°C for sixty minutes to form the PAI resin. Then, the PAI resin was subjected to thermomechanical measurement with a thermomechanical analyzer (TMA), a product of Seiko Instruments Inc. The conditions of the measurements were as follows: the jig was a tension type; the distance between chucks was 10 mm; the temperature was varied from a room temperature (25°C) to 400°C; the rate of increase of temperature was 10°C/minute; the tensile load was 5g, and; the size of the sample was 2 mm in width and 30 mm in length, 20 µm in thickness. The results are shown in Figs. 1 to 3. Fig. 1 shows the results of the TMA measurements of the PAI resin of the test article I, Fig. 2 shows the results of the TMA measurements of the PAI resin of the test article II, and Fig 3 shows the results of the TMA measurements of the PAI resin of the comparison article. In Figs. 1 to 3, line A represents elongation per unit time, line C represents the amount of elongation, and line B represents the load. As shown in Figs. 1 to 3, the glass transition temperature of the PAI resin of the test article I is 307.1°C, the glass transition temperature of the PAI resin of the test article II is 293.0°C, and the glass transition temperature of the PAI resin of the comparison article 249.7°C.

According to the results of the tests carried out by the present inventors, a PAI resin having a glass transition temperature no less than 270°C is preferably used. Further, a PAI resin having a glass transition temperature no less than 290°C is more preferable.

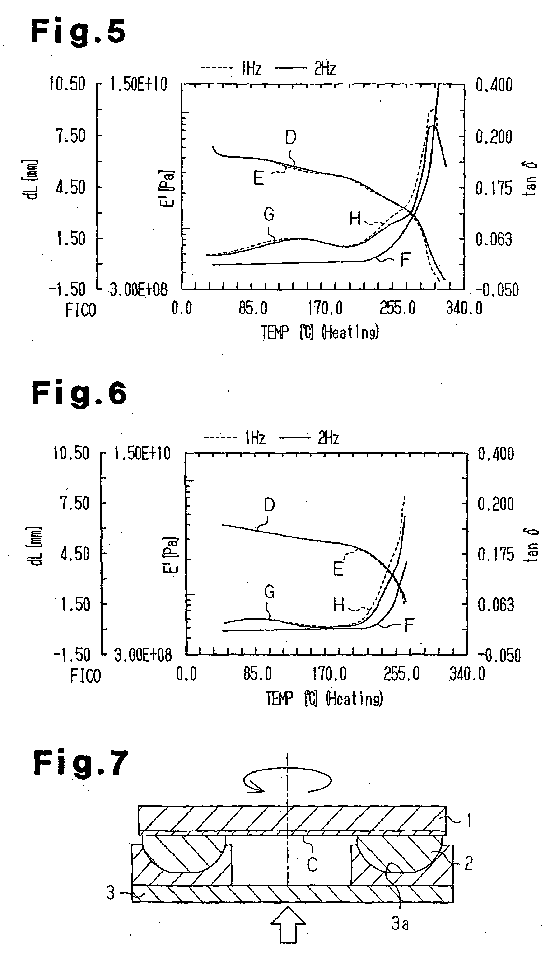

Each of the PAI resin varnishes of the test articles I, II and the comparison article was baked at 200°C for sixty minutes to form the PAI resin. Then, the PAI resin was subjected to dynamic viscoelasticity measurement with a dynamic mechanical analyzer (DMA), a product of Seiko Instruments Inc. The conditions of the measurements were as follows: the jig was a tension type; the distance between chucks was 20 mm; the temperature was varied from a room temperature (25°C) to 400°C; the measuring frequencies were 1Hz and 2Hz, the rate of increase of temperature was 3°C/minute; the tensile load was 5g, and; the size of the sample was 4 mm in width and 40 mm in length, 20 µm in thickness. The results are shown in Figs. 4 to 6. Fig. 4 shows the results of the DMA measurements of the PAI resin of the test article I, Fig. 5 shows the results of the DMA measurements of the PAI resin of the test article II, and Fig 6 shows the results of the DMA measurements of the PAI resin of the comparison article. In each of Figs. 4 to 6, broken line in the graph represents data of the measurement at the measuring frequency of 1 Hz, solid line represents data of the measurement at the measuring frequency of 2 Hz. In each of Figs. 4 to 6, line D and line E each represent storage elastic modulus, line F represents the elongation of the resin, and lines G and H each represent tanδ.

As obvious from Figs. 4 to 6, the PAI resin of the test article I has a tensile strength of 249 MPa (storage elastic modulus at 250°C is 3.39 × 10⁹Pa) at room temperature, the PAI resin of the test article II has a tensile strength of 200 MPa (storage elastic modulus at 250°C is 1.75 × 10⁹Pa) at room temperature, and the PAI resin of the comparison article has a tensile strength of 150 MPa (storage elastic modulus at 250°C is 1.39 × 10⁹Pa) at room temperature. According to the results of the tests carried out by the present inventors, a PAI resin having a tensile strength no less than 200 MPa at room temperature is preferably used.

As a solid lubricant of another ingredient used in the coating composition of the present invention, polytetrafluoroethylene (PTFE), ethylene-tetrafluoroethylene (ETFE), tetrafluoroethylene-hexafluoropropylene copolymer (FEP), molybdenum disulfide (MoS₂), graphite and the like may be employed. According to the results of the tests carried out by the present inventors, it is preferable that at least a part of the solid lubricant is PTFE.

After the preliminary configuration described above, PTFE, MoS₂ and graphite were used as the solid lubricant in the following examples.

In the sliding film C of this embodiment, the volume ratio of the sold lubricant and the binder resin in a range between 40:60 to 60:40. If the volume ratio of the solid lubricant to the binder resin is less than a value 40:60, the sliding film has an insufficient seizure resistance. On the other hand, if the volume ratio of the solid lubricant to the binder resin is more than 60:40, the seizure resistance of the sliding film cannot be significantly improved, and the solid lubricant is likely to drop off. This results in increased wear depth of the sliding film.

Mixtures were formed each containing 18 vol% of the PTFE powder, 18 vol% of MoS₂, and 14 vol% of graphite, and 50vol% of the PAI resin of the test article I, the test article II, or the comparison article. After being sufficiently agitated, the mixtures were each sent to a three-roll mill. Accordingly, sliding member coating compositions of the test articles I, II and the comparison article were produced. The coating compositions each may be diluted with a solvent, which is, for example, n-methyl2-pyrrolidone, xylene, or the mixture of these, as necessary in order to adjust the viscosity and the solid concentration in accordance with the type of coating (spray coating, roll coating).

Then, as shown in Fig. 7, a plurality of disk-shaped swash plates 1 made of degreased aluminum alloy A390 were prepared. One surface of each swash plate 1 was coated with the coating compositions using an air spray to form a film having a thickness of 25 µm. Instead of using an air spray, the compositions may be transferred onto the surface through roll coating. Each swash plate 1, on which the film was formed, was then heated at 200°C for sixty minutes under atmospheric conditions. In this manner, the sliding films C of the test articles I, II and the comparison article were formed on the swash plates 1.

A plurality of shoes 2 made of degreased iron-based alloy SUJ2 were prepared. Further, a jig 3 having two hemispherical seats 3a for receiving the hemispherical portions of the shoes 2 was prepared. The jig 3 was placed with the openings of the hemispherical seats 3a facing upward. Each shoe 2 was placed in the hemispherical seats 3a at the hemispherical portion, respectively. Then, the swash plate 1 was placed such that the sliding film C contacted the flat portions of the shoes 2. Subsequently, while applying a load of 1.96 kN between the jig 3 and the swash plate 1, the swash plate 1 was rotated at a peripheral velocity of 10.6 m/second. No lubricating oil was supplied. A thermocouple was provided between each hemispherical seat 3a and the flat portion of the corresponding shoe 2.

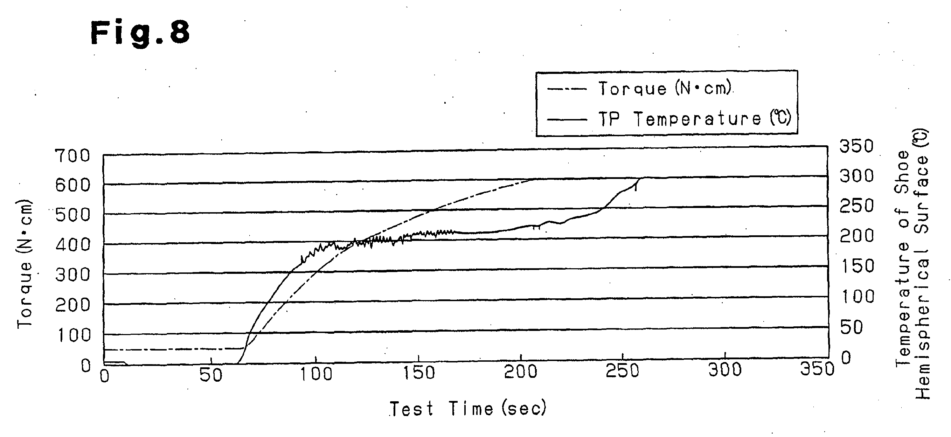

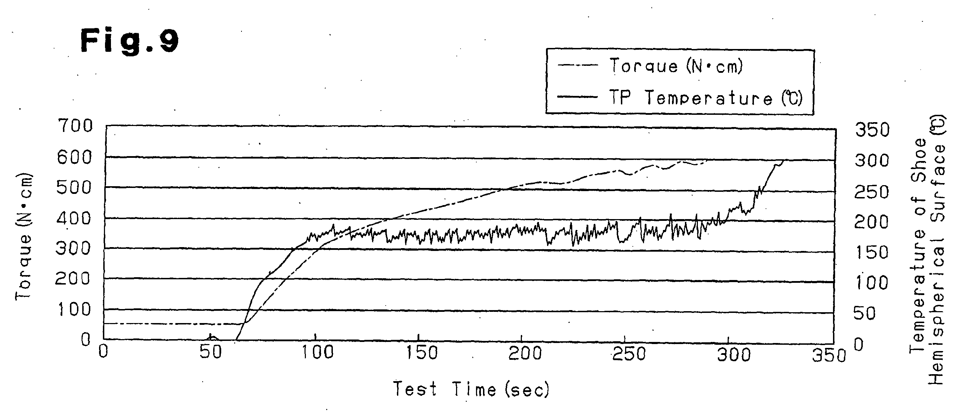

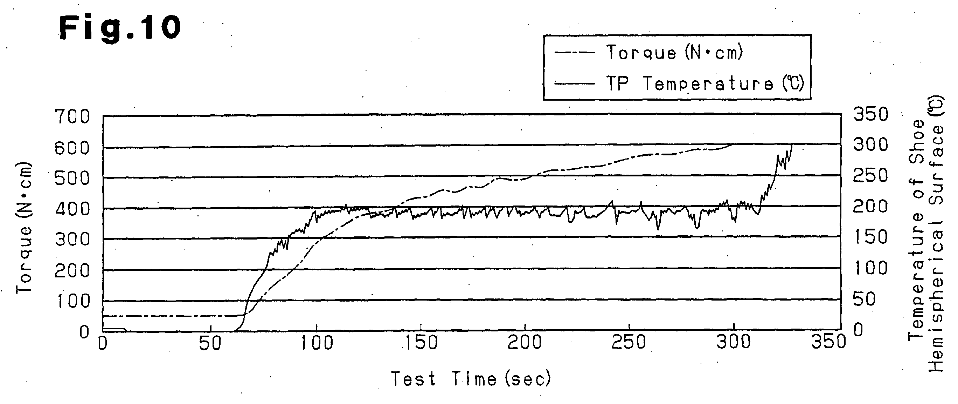

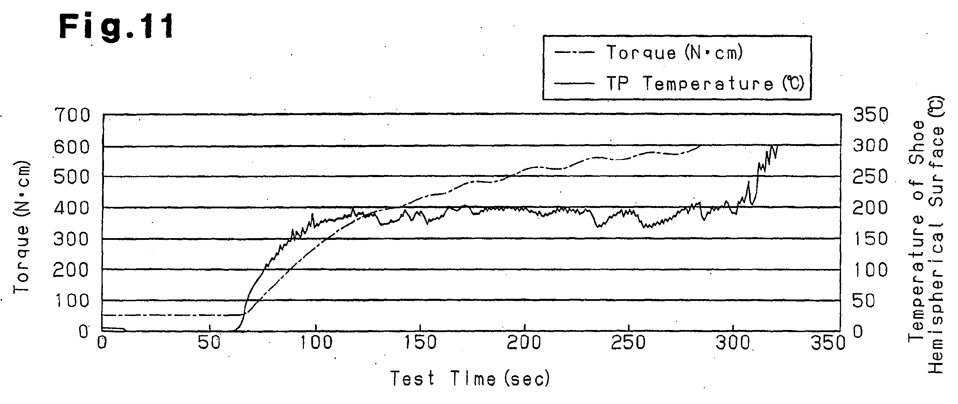

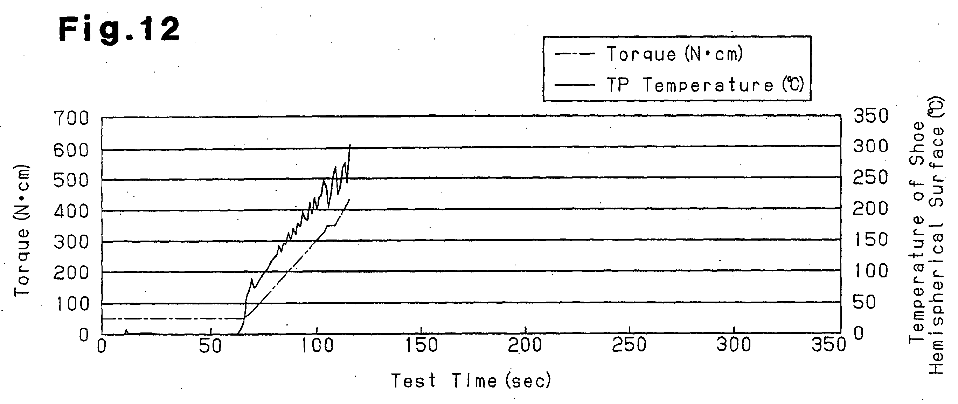

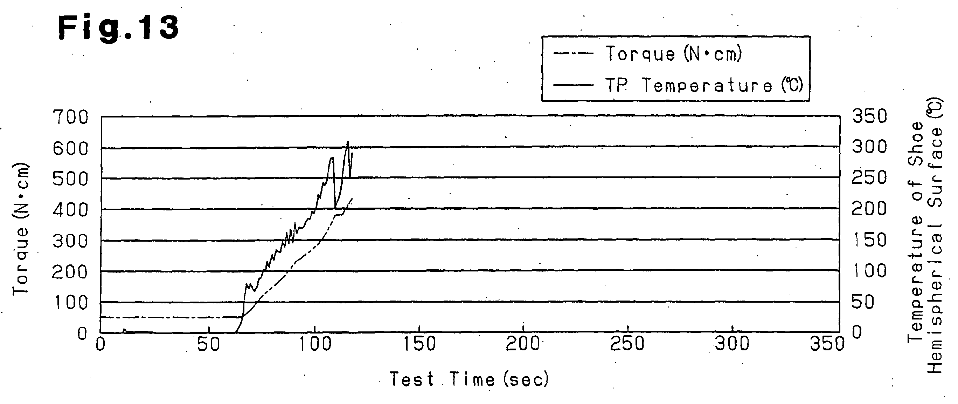

In this manner, the relationship among the duration of the tests (seconds), the torque (N·cm), and the temperature (TP temperature: °C) of the hemispherical surfaces of the shoes 2 were obtained regarding the sliding films C of the test articles I, II, and the comparison article. The results are shown in Figs. 8 to 13. Fig. 8 shows the result of a first round of a test on the sliding film C of the test article I. Fig. 9 shows the result of a second round of a test on the sliding film C of the test article I. Fig. 10 shows the result of a first round of a test on the sliding film C of the test article II. Fig. 11 shows the result of a second round of a test on the sliding film C of the test article II. Fig. 12 shows the result of a first round of a test on the sliding film C of the comparison article. Fig. 13 shows the result of a second round of a test on the sliding film C of the comparison article.

As shown in Figs. 8 to 11, in the tests of the sliding films C of the test articles I, II with no lubrication, the torque did not reach 600 N·cm before 200 to 300 seconds elapsed, and the films C were unlikely to seize. At this time, the temperature of the hemispherical surfaces of the shoes 2 was approximately 220°C to 225°C. In contrast to this, in the sliding film C of the comparison article, the torque reached 600 N·cm at about 110 seconds as shown in Figs. 12 and 13, and seizure is likely to occur.

The temperature of the hemispherical surfaces of the shoes 2 when seizure occurred was approximately 220° C. The results show that the sliding films C of the test articles I, II are capable of exerting a better sliding performance in harsh environments than the sliding film C of the comparison article. Also, the results show that the sliding films C are softened when the temperature substantially reaches the temperature of the glass transition, and seizure occurs.

In other words, on the basis of the coating compositions for use in sliding members of the test articles I, II, sliding films C that exhibit excellent sliding property even under a harsh condition can be formed. This is because at least part of the solid lubricant is PTFE powder.

The inventors carried out the following examinations regarding the aforementioned effects. A conventional PAI resin is produced in the following manner. That is, a trimellitic anhydride (TMA) represented by structural formula 1 is caused to react with 4,4'-diphenylmethane diisocyanate (MDI) represented by structural formula 2. A PAI resin thus obtained has substantially the same number of imide groups and amide groups as shown in structural formula 3.

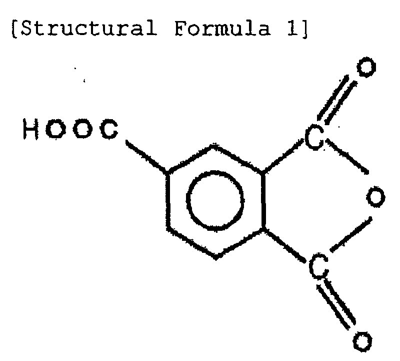

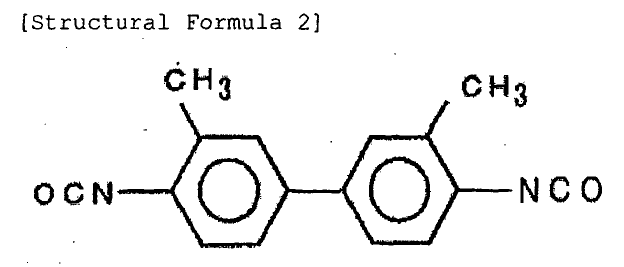

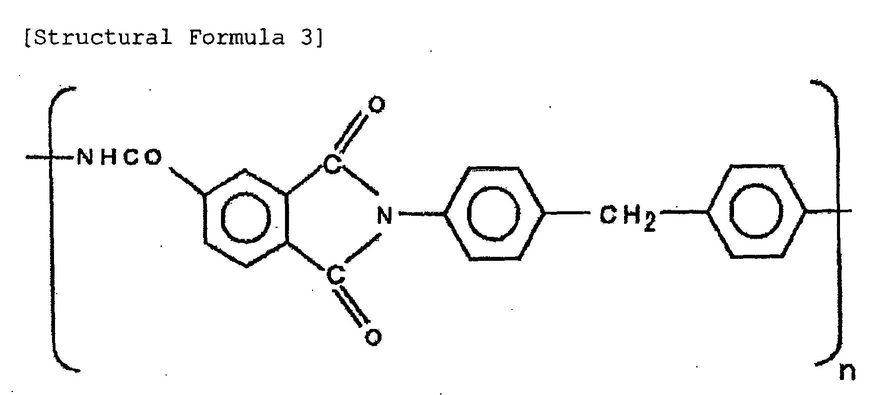

In contrast, to obtain a PAI resin having a high heat resistance, a high elasticity, a high mechanical strength, and a low thermal expansion coefficient, the isocyanate component is changed. The TMA of structural formula 1 is caused to react with 3,3'-dimethylbiphenyl-4,4'-diisocyanate (TODI) of structural formula 4. The PAI resin thus obtained is a resin enhanced in strength and heat resistance. If approximately half of MDI is replaced by TODI through a conventional method, the glass transition temperature of the PAI resin will be sufficient as a sliding member coating composition. Therefore, the PAI resin is preferably formed by adding 5% to 90% by mol of TODI in the whole isocyanate component in the crude materials and causing the isocyanate component to react. Since the relatively costly TODI is used in this method, the production costs are inevitably increased.

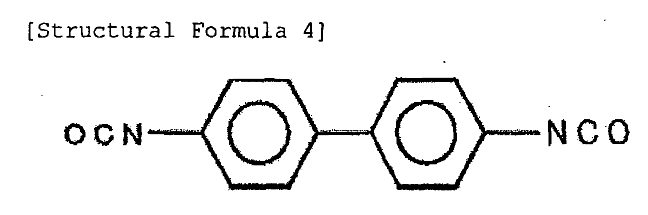

The TMA of structural formula 1 is caused to react with the MDI of structural formula 2 and 3,3',4,4'-benzophenonetetracarboxylic acid (BTDA) represented by structural formula 5. To obtain a PAI resin having a high heat resistance, a high elasticity, a high mechanical resistance, and a low thermal expansion coefficient, the isocyanate component is changed. The TMA of structural formula 1 is caused to react with the TODI of structural formula 4 and the BTDA of the structural formula 5. Since the BTDA provides a great number of imide groups, the PAI resin thus produced contains more imide groups than amide groups. The PAI resin that has more imide groups than amide groups, strongly exerts the characteristics of polyimide. That is, such a PAI resin has a high elasticity, a high heat resistance, and a high extensibility. However, since imide groups do not dissolve in n-methyl-2-pyrrolidone, the amount of the imide groups cannot be increased beyond a value that corresponds to a ratio of amide groups to imide groups of 35:65. Since the relatively costly BTDA is used in this method, the production costs are inevitably increased.

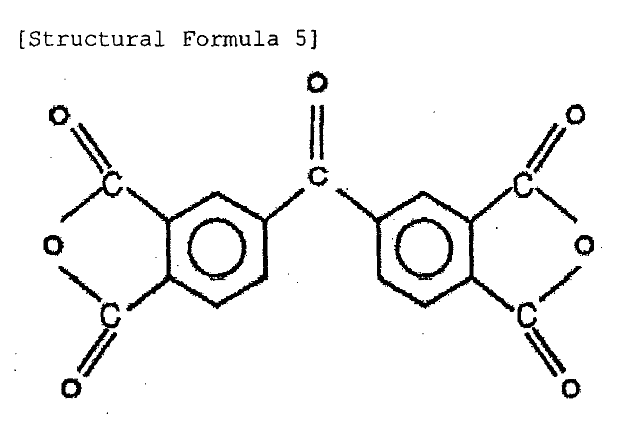

### (Test (ii))

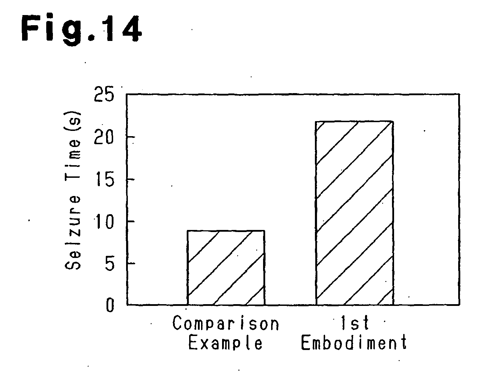

Each of sliding films C was formed on a corresponding swash plate 1 under the same conditions as those for the test (i), by use of the above described coating composition for use in sliding members of the test article I and the above described coating composition for use in sliding members of the comparison article. By use of these swash plates 1, the swash plate type compressors of the test article I and the comparison article were prepared. No lubricating oil was supplied to the crank chamber of each of the swash plate type compressor of the test article I and the swash plate type compressor of the comparison article. The number of revolutions was set at 3000 rpm. In this state, time (seconds) until seizure occurs between each of the swash plates 1 and the shoes 2 was measured. The results are shown in Fig. 14. These swash plate type compressors are ones well known in the art in each of which the inclination angle of the swash plate 1 is fixed, and there are 5 cylinder bores on both sides of the swash plate 1.

As shown in Fig. 14, the swash plate type compressor of the test article I does not cause the seizure for a longer period of time than the swash plate type compressor of the comparison article even under the condition of no lubrication. The results show that the compressor using the sliding film C of the test article I exerts a superior durability. In the case where the coating composition for use in sliding members of the present invention is used in a compressor that uses carbon dioxide as a refrigerant and compresses carbon dioxide, the durability of the compressor is improved.

It should be apparent to those skilled in the art that the present invention may be embodied in many other specific forms without departing from the spirit or scope of the invention. Particularly, it should be understood that the invention may be embodied in the following forms.

The binder resin, which is a PAI resin, in the sliding films C according to the present invention may contain, other than the solid lubricant, a friction modifier, a pressure reducing agent, a surface active agent, and a film forming assisting agent. As the friction modifier, powder of oxidized metal such as Cro₂, Fe₂O₃, Fe₃O₄, PbO, ZnO, CdO, Al₂O₃, SiO₂, TiO₂, SnO₂, and inorganic powder of substances such as SiC and Si₃N₄ may be used. The added friction modifier is assumed to bear loads acting between a first member and second member, thereby improving the sliding property of sliding films. As the depressurizing agent, the following substances may be used: powder of sulfide such as ZnS, Ag₂S, CuS, FeS, FeS₂, Sb₃S₂, PbS, Bi₂S₃, CdS; a sulfur compound such as thirams, morpholine, disulfide, dithioate, sulfides, sulfoxides, sulfonic acids, thiophosphinates, thiocarbonate, alkylthiocarbamoyls, and olefin sulfide; halogen compound such as chlorinated hydrocarbon; organic metal compounds such as zinc thiophosphate (zinc dithiophosphate, for example) and thiocarbamic acid, and organic molybdenum compound such as molybdenum dithiophosphate and molybdenum dithiocarbamate. The added depressurizing agent is expected to strongly retain lubricant oil, and improves the sliding property of sliding films under insufficient lubrication where there is occasional contact of solid bodies and when load applied to sliding members is uneven. A coupling agent may be used as the surface active agent. The added coupling agent is thought to cause the solid lubricant to be strongly coupled to the binder resin, and cause the sliding film to at least one of the first and second members. As the film formation aiding agent, an epoxy resin, a silane coupling agent, a titanate coupling agent.

The present examples and embodiments are to be considered as illustrative and not restrictive and the invention is not to be limited to the details given herein, but may be modified within the scope and equivalence of the appended claims.

A coating composition for use in sliding members contains a polyamideimide resin and a solid lubricant and is prepared by mixing these ingredients. The polyamideimide resin is a substance having a glass transition temperature of 270°C or above or a substance having a tensile strength of 200 MPa or more at room temperature. The sliding film made of the coating composition for use in sliding members is provided with a satisfactory sliding property.

## Claims

1. A coating composition for use in sliding members, wherein the composition is obtained by mixing a polyamide-imide resin and a solid lubricant, the coating composition being **characterized in that** at least one of the following requirements is satisfied:
(I) the glass transition temperature of the polyamide-imide resin is no less than 270°C,
(II) the tensile strength of the polyamide-imide resin at room temperature is no less than 200 MPa, and
(III) the polyamide-imide resin contains more imide groups than amide groups.

2. The compressor according to claim 1, **characterized in that** at least the requirement (I) is satisfied.

3. The compressor according to claim 1, **characterized in that** at least the requirement (II) is satisfied.

4. The compressor according to claim 1, **characterized in that** at least the requirement (III) is satisfied.

5. The compressor according to any one of claims 1 to 4, **characterized in that** the glass transition temperature is no less than 290°C.

6. The compressor according to any one of claims to 5, **characterized in that** the solid lubricant contains polytetrafluoroethylene.

7. The compressor a according to any one of claims 1 to 6, **characterized in that** isocyanate component, which is a crude material of the polyamide-imide resin, contains 5% to 90% by mol of 3,3'-dimethylbiphenyl-4,4'-diisocyanate.

8. The compressor according to any one of claims 1 to 7, **characterized in that** the number average molecular weight of the polyamide-imide resin is no less than 20,000.
